**Europäisches Patentamt**

**European Patent Office**

**Office européen des brevets**

(11) Veröffentlichungsnummer : **0 051 834**
**B1**

(12) **EUROPÄISCHE PATENTSCHRIFT**

(45) Veröffentlichungstag der Patentschrift :
19.12.84

(51) Int. Cl.³ : **F 16 C 29/06**

(21) Anmeldenummer : **81109331.9**

(22) Anmeldetag : **30.10.81**

(54) **Wälzlager für Längsbewegungen.**

(30) Priorität : **07.11.80 DE 8029743 U**

(43) Veröffentlichungstag der Anmeldung :
**19.05.82 Patentblatt 82/20**

(45) Bekanntmachung des Hinweises auf die Patenterteilung : **19.12.84 Patentblatt 84/51**

(84) Benannte Vertragsstaaten :
**FR GB IT**

(56) Entgegenhaltungen :
**DE-A- 2 834 209**
**DE-A- 2 849 758**
**DE-U- 1 896 804**
**DE-U- 7 705 155**
**DE-U- 8 029 743**

(73) Patentinhaber : **SKF KUGELLAGERFABRIKEN GMBH**
**Ernst-Sachs-Strasse 2-8 Postfach 1440**
**D-8720 Schweinfurt (DE)**

(72) Erfinder : **Ernst, Horst Manfred**
**Frankenstrasse 33**
**D-8735 Eltingshausen (DE)**
Erfinder : **Brandenstein, Manfred**
**Tränkgasse 57**
**D-8781 Eussenheim (DE)**
Erfinder : **Walter, Lothar**
**Harald-Hamberg-Strasse 18**
**D-8720 Schweinfurt (DE)**
Erfinder : **Olschewski, Armin**
**Stösselstrasse 8**
**D-8720 Schweinfurt (DE)**
Erfinder : **Reith, Walter**
**Balthasar-Neumann-Strasse 15**
**D-8733 Bad Bocklet (DE)**

(74) Vertreter : **Glanz, Werner, Dipl.-Ing.**
**Ernst-Sachs-Strasse 2-8**
**D-8720 Schweinfurt (DE)**

# Beschreibung

Die Erfindung betrifft ein Wälzlager für Längsbewegungen auf einer Welle, in die mindestens eine axial verlaufende Laufbahn eingearbeitet ist, bestehend aus einer Außenhülse mit in der Bohrung axial verlaufenden Laufbahnen, in denen die Wälzkörper von am Umfang verteilten, endlosen Wälzkörperreihen angeordnet sind und aus einem in der Außenhülse eingebauten Käfig zum Führen der Wälzkörper, wobei die Außenhülse mindestens einen axial verlauffenden Schlitz aufweist, in dessen Bereich die in die Laufbahn der Welle eingreifende endlose Wälzkörperreihe angeordnet ist.

Ein Wälzlager für Längsbewegungen dieser Art wird schon in der DE-A-2 834 209 vorgeschlagen. Diese ist mit einem breiten, axial und radial durchgehenden Schlitz versehen, in dem ein eigens dafür konstruiertes separates Zwischenstück eingebaut ist, dessen endlose Wälzkörperreihe in eine axial verlaufende Laufbahn eingreift. Obwohl mit dieser Ausführung die Aufgabe der Drehmomentübertragung zufriedenstellend gelöst ist, ist die Herstellung sehr aufwendig.

Weiterhin sind durch die DE-A-2 849 758 Drehmoment-Kugelbüchsen bekannt, bei denen der belastete Laufbahnabschnitt der Außenhülse von ein oder zwei Kugelreihen mit einer Stellschraube radial verschoben werken kann. Ein besonderer Nachteil dieser Ausführung besteht darin, daß nur ein Teil der im Prinzip endlosen Laufbahn und dadurch nur ein Teil der betreffenden Kugelreihe verschoben wird, während die restlichen Kugeln und Laufbahnteile in ihrer Position verbleiben. Dadurch ist nicht gewährleistet, daß die Kugeln im gesamten Verstellbereich genau geführt in die belastete Laufbahnrille einlaufen bzw. aus ihr herauslaufen können, wodurch an den Übergangsstellen Verschleiß und starkes Geräusch auftritt, die Kugelbüchse vorzeitig ausfallen kann bzw. grundsätzlich mit einer geringeren durchschnittlichen Lebensdauer gerechnet werden muß.

Die DE-U-7 705 155 zeigt eine Kegelbuchse, die nicht zur Übertragung von einem Drehmoment geeignet ist, wobei zur Spieleinstellung der gesamten Wälzkörperreihen die Außenhülse einen durchgehenden Schlitz aufweist.

Aufgabe der Erdindung ist es, ein Wälzlager für Längsbewegungen der eingangs genannten Art zu schaffen, das zur Übertragung von Drehmomenten kein besonders konstruiertes, separates Zwischenstück benötigt und bei der die Laufbahn der drehmomentbelasteten Wälzkörperreihen bei der radialen Verstellung nicht verändert wird.

Die Aufgabe wird dadurch gelöst, daß der Schlitz der Außenhülse als schmaler, axial durchgehender Trennschlitz ausgeführt ist, daß der die Wälzkörper der endlosen Wälzkörperreihen führende Käfig (2) auch die Wälzkörper der endlosen Wälzkörperreihe (3) zur Übertragung des Drehmomentes aufnimmt und im Bereich der Trennschlitze zusammenhaltende, eine gegenseitige radiale Verschiebund der Käfigenden zulassende Verbindungselemente aufweist und daß die gesamte dem jeweiligen Trennschlitz benachbarte Wälzkörperreihe an die axial verlaufende Laufbahn der Welle radial anstellbar angeordnet ist.

Das Wälzlager für Längsbewegungen weist mindestens einen, vorzugsweise zwei, zu beiden Seiten einer Wälzkörperreihe angeordnete, axial durchgehende Schlitze auf. Diese sind sehr schmal ausgeführt, so daß der gleichmäßige Abstand der Wälzkörperreihen gegenüber einer nicht geschlitzten Ausführung nicht geändert werden muß. Das zwischen zwei Trennschlitzen angeordnete Segment ist vollständig ausgebildet und besteht, wie bei jeder anderen Wälzkörperreihe aus dem Teil der Außenhülse mit Laufbahnen für die Lastzone, den Rücklauf und die Umlenkung der Wälzkörper und aus einem Käfigteil. Vorteilhafterweise kann das ganze Segment des Wälzlagers zur Anstellung an die Laufbahn der Welle und zum Zweck der Drehmomentübertragung radial verschoben werden. Im gesamten Verstellbereich bleiben alle Bestandteile des Segmentes relativ zueinander in ihrer Lage, so daß die Laufeigenschaften so gut sind wie die des übrigen Wälzlagers. Damit die kompakte Form erhalten bleibt sind im Bereich der Trennschlitze Verbindungselemente angebracht, die ein Auseinanderfallen der Einzelteile verhindern. Diese sind jedoch so ausgebildet, daß die radiale Verschiebung des Segmentes nur wenig behindert wird. Im eingebauten Zustand kann durch eine ocer mehrere im Gehäuse radial angeordnete Schrauben oder dgl. die Verschiebung une damit die Anstellung durchgeführt werden. Wenn für bestimmte Anwendungsfälle eine kleine radiale Verschiebung ausreicht, kann ein einziger Trennschlitz genügen, wobei eine der dem Trennschlitz benachbarten Wälzkörperreihe infolge der elastischen Biegefähigkeit der Außenhülse radial eingezogen werden kann.

Nach einem weiteren Merkmal der Erfindung sind die Verbindungselemente beim Schlitzen bereits fertig montierter Wälzlager für Längsbewegungen verbleibend als biegsame Verbindungsstege angeordnet. Vorzugsweise werden die Trennschlitze von außen her, zum Beispiel durch Sägen oder dgl., eingearbeitet. Die Außenhülse wird ganz getrennt, der Käfig wird jedoch nur so tief geschlitzt, daß ein dünner Verbindungssteg über die gesamte Länge des Käfigs stehen bleibt. Insbesondere bei Kunststoffkäfigen reicht die Elastizität meist aus, um die notwendige radiale Verschiebung der benachbarten Wälzkörperreihe zu ermöglichen. Das nachträgliche Schlitzen von Wälzlagern für Längsbewegungen der Normalausführung hat besondere Vorteile für eine wirtschaftliche Fertigung und Lagerhaltung, da die Herstellung bis auf das Schlitzen bei beiden Ausführungen gleich sein kann.

In einem anderen Ausführungsbeispiel sind die Verbindungselemente bei der Herstellung des Käfigs in der Form eines Scharniers mit Sollbiegestellen ausgebildet. Dadurch wird ein in radialer Richtung besonders leichtgängiges Verbindungselement geschaffen, das jedoch den Käfig sicher zusammenhält und die Wälzkörperreihen axial genau positioniert.

Nach einem weiteren Merkmal der Erfindung ist neben dem Trennschlitz noch ein weiterer radial nur teilweise durch die Außenhülse verlaufender axialer Schlitz vorgesehen. Diese Ausführung wird besonders dort verwendet, wo eine große der radialen Anstellung entgegenwirkende Kraft nötig ist, der Verstellbereich der einmal geschlitzten Ausführung aber nicht ausreicht.

Bei mehrfach geschlitztem Wälzlager für Längsbewegungen können nach einem anderen Ausführungsbeispiel der Erfindung die Segmente der Außenhülse durch geeignete Mittel, wie einschnappende Zapfen oder dgl. am Käfig befestigt werden.

Eine andere Möglichkeit, Segmente der Außenhülse gegen Herausfallen zu sichern, besteht darin, daß die Trennschlitze, ein Selbsthalten der Segmente bewirkend, radial zueinander geneigt verlaufen. Dadurch entsteht eine bei Schlittenführungen im Werkzeugmaschinenbau auch mit Schwalbenschwanz bezeichnete Halteinrichtung, die vorteilhafterweise ohne Zuhilfenahme anderer Elemente nur durch schräges Anbringen der Trennschlitze entsteht.

Um bei bestimmten Anwendungsfällen ein Ansammeln von Schmutz zu verhindern, können die Trennschlitze mit einem weichelastischen Werkstoff ausgefüllt werden.

Mit der erfindungsgemäßen Ausführung wurde ein Wälzlager für Längsbewegungen geschaffen, das mit geringstem Aufwand, unter anderem aus der Normalausführung hergestellt werden kann und darüber hinaus aber die Präzision beibehält.

Im folgenden wird die Erfindung anhand der in den Zeichnungen dargestellten Beispiele beschrieben :

Es zeigen :

Figur 1  den Querschnitt eines Wälzlagers für Längsbebewegungen mit zwei Trennschlitzen und

Figur 2  die Teilansicht eines Wälzlagers für Längsbewegungen mit einem Trennschlitz, einer Sollbiegestelle und Scharnier als Verbindungselement im Querschnitt.

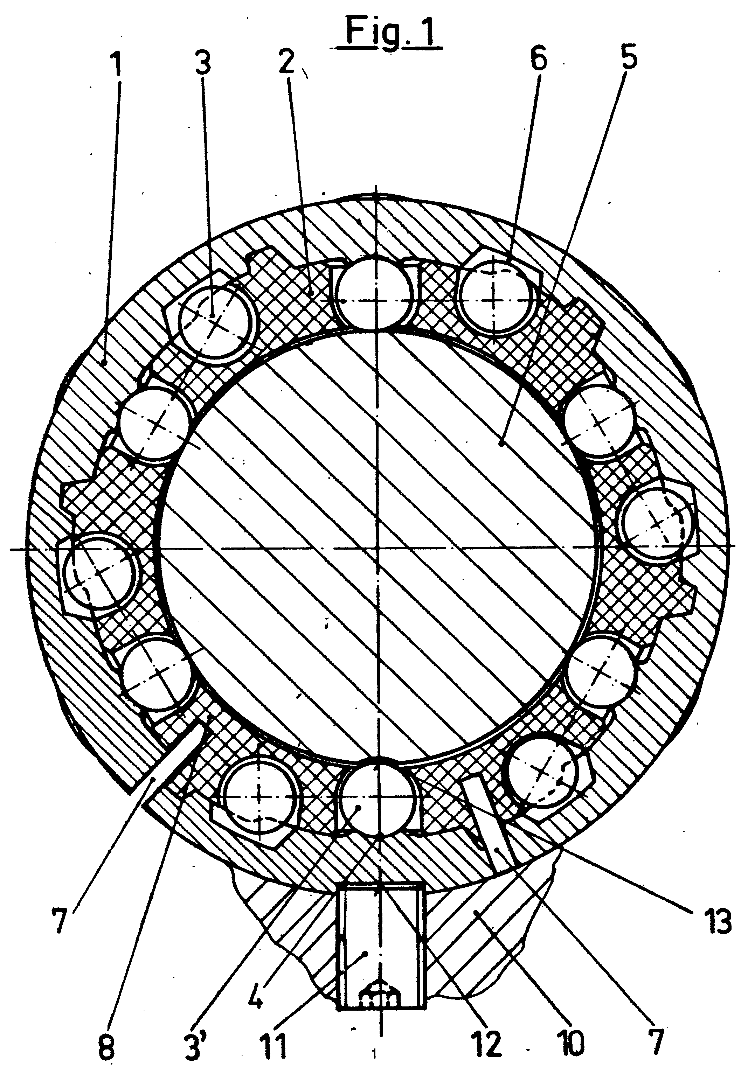

Das in Fig. 1 dargestellte Wälzlager für Längsbewegungen besteht aus einer Außenhülse 1 mit in der Bohrung axial verlaufenden Laufbahnen 4, 6, aus einem Käfig 2 und aus sechs endlosen Kugelreihen 3, deren Kugeln in der Lastzone 4 zwischen einer Welle 5 und der Außenhülse 1 laufen, in einem nicht dargestellten Schlußring umgelenkt werden und über die Rücklaufbahnen 6 der Außenhülse 1 und einem weiteren Schlußring wieder in die Lastzone 4 einlaufen. Die außenhülse 1 und die Schlußringe sind zwischen der Laufbahnen 4, 6 an zwei Stellen mit axial durchgehenden Trennschlitzen 7 versehen, so daß ein Segment mit einer Kugelreihe 3' entsteht.

Der Käfig 2 wurde in radialer Richtung nur so tief geschlitzt, daß elastische Verbindungsstege 8 verbleiben. Dadurch behält der Käfig seine Form. Durch eine in einem Gehäuse 10 oder dgl. angeordnete Schraube 11 ist das ganze Segment über eine Angriffsfläche 12 radial verschiebbar. Beim Anstellen greifen die Kugeln in der Kugelreihe 3' in der Lastzone 4 in eine axial verlaufende Laufbahn 13 der Welle 5. Dabei verformen sich die Verbindungsstege 8 elastisch. Bei Bedarf können eine zweite oder auch mehrere gleiche Anordnungen vorgesehen werden.

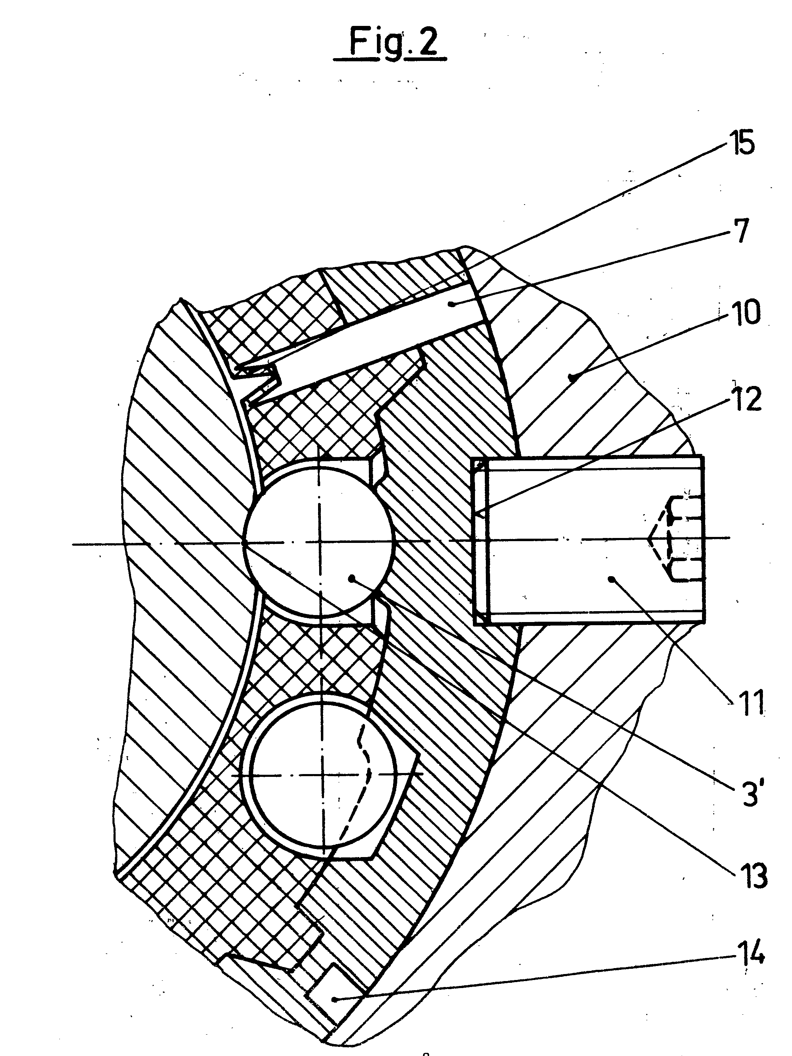

Bei der in Fig. 2 dargestellten Kugelbüchse ist gegenüber der Ausführung in Fig. 1 anstelle des zweiten Trennschlitzes 7 zur Schaffung einer Sollbiegestelle ein nur teilweise radial verlaufender Schlitz 14 in der Außenhülse 1 vorgesehen. Die Schwächung des Materials bewirkt, daß bei einer Radialverstellung mit der Schraube 11 eine elastische Biegung vorzugsweise an dieser Stelle auftritt. Das im Trennschlitz 7 angeordnete Verbindungselement ist als Scharnier 15 ausgebildet, das bei der Herstellung des Kunststoffkäfigs angeformt wird.

Die in den Fig. dargestellten Ausführungsformen, insbesondere die Art der Verbindungselemente, sind nur Beispiele und können auch durch andere Lösungen ersetzt werden.

## Ansprüche

1. Wälzlager für Längsbewegungen auf einer Welle (5), in die mindestens eine axial verlaufende Laufbahn eingearbeitet ist, bestehend aus einer Außenhülse (1) mit in der Bohrung axial verlaufenden Laufbahnen (4, 6), in denen die Wälzkörper von am Umfang verteilten, endlosen Wälzkörperreihen (3, 3') angeordnet sind, und aus einem in der Außenhülse eingebauten Käfig zum Führen der Wälzkörper, wobei die Außenhülse mindestens einen axial verlaufenden Schlitz (7) aufweist, in dessen Bereich die in die Laufbahn der Welle eingreifende endlose Wälzkörperreihe (3') zur Übertragung des Drehmomentes angeordnet ist, dadurch gekennzeichnet, daß der Schlitz der Außenhülse (1) als schmaler axial durchgehender Trennschlitz (7) ausgeführt ist, daß der die Wälzkörper der endlosen Wälzkörperreihen führende Käfig (2) auch die Wälzkörper der endlosen Wälzkörperreihe (3) zur Übertragung des Drehmomentes aufnimmt und im Bereich der Trennschlitze (7) zusammenhaltende, eine gegenseitige radiale Verschiebung der Käfigenden zulassende Verbindungselemente (8, 15) aufweist und daß die gesamte, dem jeweiligen Trennschlitz (7) benachbarte Wälzkörperreihe (3) samt den entsprechenden Segmenten der Außenhülse und des Käfigs an die axial verlaufende Laufbahn (13) der Welle (5) radial anstellbar angeordnet ist.

2. Wälzlager für Längsbewegungen nach Anspruch 1, dadurch gekennzeichnet, daß die Verbindungselemente des Käfigs (2) beim Schlitzen bereits fertig montierter Wälzlager der Normalausführung verbleibend als biegsame Verbindungsstege (8) angeordnet sind.

3. Wälzlager für Längsbewegungen nach Anspruch 1, dadurch gekennzeichnet, daß die Verbindungselemente bei der Herstellung des Käfigs (2) in der Form eines Scharniers (15) mit Sollbiegestellen ausgebildet sind.

4. Wälzlager für Längsbewegungen nach einem der Ansprüche 1 bis 3, dadurch gekennzeichnet, daß neben dem Trennschlitz (7) noch ein weiterer, radial nur teilweise durch die Außenhülse (1) verlaufender axialer Schlitz (14) vorgesehen ist.

5. Wälzlager für Längsbewegungen nach einem der Ansprüche 1 bis 4, dadurch gekennzeichnet, daß bei mehrfach geschlitzter Außenhülse (1) die Segmente der Außenhülse (1) durch geeignete Mittel, wie einschnappende Zapfen (9) oder dgl., am Käfig (2) befestigt sind.

6. Wälzlager für Längsbewegungen nach einem der Ansprüche 1 bis 4, dadurch gekennzeichnet, daß bei mehrfach geschlitzter Außenhülse (1) die Trennschlitze (7), ein Selbsthalten der Segmente der Außenhülse (1) bewirkend, radial zueinander geneigt verlaufen.

## Claims

1. Roller bearing for longitudinal movement along a shaft (5), where at least one axially extending raceway is formed in the shaft, comprised of an outer sleeve (1) with axially extending raceways (4, 6) in the bore accommodating the rolling elements in a plurality of circumferentially distributed endless rows (3, 3'), and a cage in said outer sleeve for guiding the rolling elements, said outer sleeve having at least one axially extending slot (7) wherein the row of rolling elements (3) adjacent to said slot is arranged to engage the raceway formed in said shaft for transmission of torque, characterized in that the slot in the outer sleeve (1) is executed as a narrow separating slot (7) extending axially completely through said outer sleeve, in that the cage (2) guiding the rolling elements of the endless rows of rolling elements also accomodates the rolling elements of the endless row (3) for transmission of torque and is provided with connecting means (8, 15) aligned with the slots (7) that permit a reciprocal radial displacement of the cage ends while holding said cage ends together, and in that the entire row of rolling elements (3) adjacent to the respective separating slot (7) together with the corresponding segments of the outer sleeve and the cage is arranged radially adjustable at the axially extending raceway (13) of the shaft (5).

2. Roller bearing for longitudinal movement as claimed in claim 1, characterized in that, on slotting already completely assembled rolling bearings in standard execution, the connecting means remain as bendable interconnecting webs (8).

3. Roller bearing for longitudinal movement as claimed in claim 1, characterized in that the connecting means are executed during manufacture of the cage (2) in the form of a hinge (15) with desired bending points.

4. Roller bearing for longitudinal movement as claimed in any one of claims 1 to 3, characterized in that, apart form the separating slot (7), a second axially extending slot (14) extends only partially in radial direction through the outer sleeve (1).

5. Roller bearing for longitudinal movement as claimed in any one of claims 1 to 4, characterized in that the segments of the multiple slotted outer sleeve (1) are attached to the cage (2) by appropriate means such as snap lugs or similar devices.

6. Roller bearing for longitudinal movement as claimed in any one of claims 1 to 4, characterized in that the separating slots (7) of the multiple slotted outer sleeve (1) are extending in planes radially inclined relative to each other whereby the segments of the outer sleeve (1) become self-contained.

## Revendications

1. Palier à roulement pour mouvements longitudinaux sur un arbre (5) réalisé avec au moins un chemin de roulement s'étendant axialement, le palier étant composé d'une douille extérieure (1) ayant dans son alésage de chemins de roulement (4, 6) qui s'étendent axialement et recueillent les éléments roulants en de rangées sans fin (3, 3') réparties sur la circonférence, et d'une cage insérée dans la douille extérieure pour guider les éléments roulants, la douille extérieure comportant au moins une fente (7) axiale adjacente à laquelle est disposée la rangée d'éléments roulants sans fin (3') en prise avec le chemin de roulement de l'arbre pour la transmission du couple, caractérisé par le fait que la fente dans la douille extérieure (1) est réalisée en forme d'une étroite fente de séparation (7) axiale traversant la douille extérieure, que la cage (2) guidant les éléments roulants des rangées sans fin recueille également les éléments roulants de la rangée sans fin (3) pour transmettre le couple et comporte d'éléments de raccord (8, 15) adjacents aux fentes de séparation (7) permettant un déplacement radial des bouts de cage l'un par rapport à l'autre tout en tenant les bouts de cage ensembles, et que la rangée d'éléments roulants (3) entière avec les segments correspondants de la douille extérieure et de la cage, avoisinant la fente de séparation (7), est disposée de manière radialement réglable au chemin de roulement (13) s'étendant axialement de l'arbre (5).

2. Palier à roulement pour mouvements longitudinaux suivant la revendication 1, caractérisé par le fait que les éléments de raccord de la cage (2), lors de la coupure de roulements standard déjà complètement assemblés, demeurent en forme de barettes de raccord flexibles.

3. Palier à roulement pour mouvements longitudinaux suivant la revendication 1, caractérisé par le fait que les éléments de raccord sont réalisés, lors de la fabrication de la cage (2), en forme d'une charnière (15) ayant des points destinés au pliage.

4. Palier à roulement pour mouvements longitudinaux suivant l'une quelconque des revendications 1 à 3, caractérisé par le fait qu'il y a, outre la fente de séparation (7), encore une autre fente (14) axiale qui ne traverse que partiellement la douille extérieure (1) en direction radiale.

5. Palier à roulement pour mouvements longitudinaux suivant l'une quelconque des revendications 1 à 4, caractérisé par le fait que les segments de la douille extérieure (1) à multiples fentes sont fixés à la cage (2) par des moyens appropriés, par exemple par des chevilles encliquetantes ou moyens similaires.

6. Palier à roulement pour mouvements longitudinaux suivant l'une quelconque des revendications 1 à 4, caractérisé par le fait que les fentes de séparation (7) de la douille extérieure (1) à multiples fentes s'étendent radialement inclinées l'une par rapport à l'autre ce qui rend les segments de la douille extérieure (1) non démontables.

Fig. 1

# Fig. 2